# FASCICULE DE BREVET EUROPEEN

(11) **EP 1 232 698 B1**
(45) Date de publication et mention de la délivrance du brevet: **10.12.2008**
(21) Numéro de dépôt: 02405081.7
(22) Date de dépôt: 06.02.2002
(51) Int. Cl.: A43B 5/04, B29D 31/505

(54) **Chaussure de ski alpin**
Alpinskischuh
Alpine ski boot

(30) Priorité: 14.02.2001 CH 2542001
(43) Date de publication de la demande: 21.08.2002
(73) Titulaire: LANGE INTERNATIONAL S.A., 1700 Fribourg (CH)
(72) Inventeur: Marmonier, Gilles, 38960 St. Etienne de Crossey (FR); Cagliari, Peter, 31044 Montebelluna (TV) (IT)
(74) Mandataire: Bugnion Genève

(56) Documents cités:
- EP-A- 0 941 675
- WO-A-97/26959
- CH-A- 587 032
- FR-A- 1 295 561
- FR-A- 2 119 653
- GB-A- 1 220 004

## Description

La présente invention a pour objet un procédé de fabrication d'une chaussure de ski alpin à trottoirs de hauteur normalisée (notamment norme ISO 53 55) dont au moins la partie inférieure de la tige est en plastique rigide.

Les chaussures de ski à coque en matière plastique destinées à la pratique du ski alpin sont munies, à l'avant et à l'arrière, de plaquettes d'appui destinées respectivement à l'appui de la chaussure sur l'élément de fixation avant et sur l'élément de fixation arrière. Ces plaquettes d'appui doivent présenter un faible coefficient de frottement de manière à faciliter le déplacement latéral de la chaussure lors du déclenchement de la fixation en cas de chute accompagnée d'une torsion. La plaquette d'appui arrière doit en outre pouvoir glisser facilement sur la pédale du frein de ski lors du chaussage. Ces plaquettes d'appui sont venues d'une pièce avec la coque ou font partie des pièces d'usure rapportées à la chaussure au moyen de vis.

Pour la marche sans ski, les semelles de chaussure de ski sont par contre défavorables car elles présentent une très faible adhérence sur la neige et favorisent les chutes par glissade, en particulier sur la neige tassée et la glace. On essaye de réduire cet inconvénient en formant un relief sur la surface d'appui arrière, ainsi que sur une petite partie de la surface d'appui avant. Ces mesures sont toutefois insuffisantes pour prévenir une glissade, compte tenu de la dureté du matériau utilisé et de la surface lisse qu'il convient de conserver, en particulier à l'avant.

Du brevet GB 1,220,004, il est connu d'insérer une plaquette d'appui en matériau à faible coefficient de frottement dans une semelle en caoutchouc à relief lors du moulage de cette semelle sur une tige. Si l'on applique ce procédé à une chaussure moderne il est pratiquement nécessaire de remplacer le caoutchouc par un matériau rigide, c'est-à-dire par le matériau de la coque de la chaussure, pour obtenir et conserver un trottoir avant et un trottoir arrière de hauteur normalisée capables de recevoir l'appui des éléments de fixation avant et arrière, car le caoutchouc s'écraserait sous la pression des éléments de fixation, sans compter l'usure rapide du caoutchouc qui modifierait la hauteur des trottoirs.

La présente invention a pour but d'obvier à l'inconvénient susmentionné des chaussures de ski alpin, c'est-à-dire de réduire le plus possible le risque de chute par glissade lors de la marche sans ski tout en conservant des trottoirs de hauteur normalisée.

La chaussure de ski selon l'invention est caractérisée par les caractéristiques de la partie caractérisante de la revendication 1.

Les surfaces d'appui peuvent être constituées de plaquettes d'appui fixées à la chaussure par la matière plastique souple surinjectée ou fixées préalablement au moyen de vis ou autre moyen ou encore être venues d'une pièce avec la partie de la chaussure en matière plastique rigide, c'est-à-dire la coque dans les chaussures à coque.

L'invention est en particulier applicable à une chaussure telle que décrite dans le brevet US 6,021,589 (EP 0 941 675), c'est-à-dire une chaussure dans laquelle la partie inférieure rigide constitue une armature en forme de berceau entourant une partie souple en forme de botte dans laquelle au moins le fond de la partie rigide est ajouré et la partie rigide est fixée à la partie en forme de botte par le matériau plastique injecté à travers le fond ajouré, entre la partie rigide et la partie en forme de botte. Dans ce cas, la matière plastique injectée est la matière fixant les plaquettes d'appui et formant la semelle profilée.

Les caractéristiques du préambule de la revendication 1 sont connues de ce document.

Le dessin annexé représente, à titre d'exemple, deux modes d'exécution de l'invention.

La figure 1 est une vue de dessous d'une chaussure selon un premier mode d'exécution.

La figure 2 est une vue en coupe selon II-II de la figure 1.

La figure 3 est une vue en coupe selon III-III de la figure 1.

La figure 4 est une vue en coupe selon IV-IV de la figure 1.

La figure 5 est une vue en perspective d'une chaussure selon un second mode d'exécution.

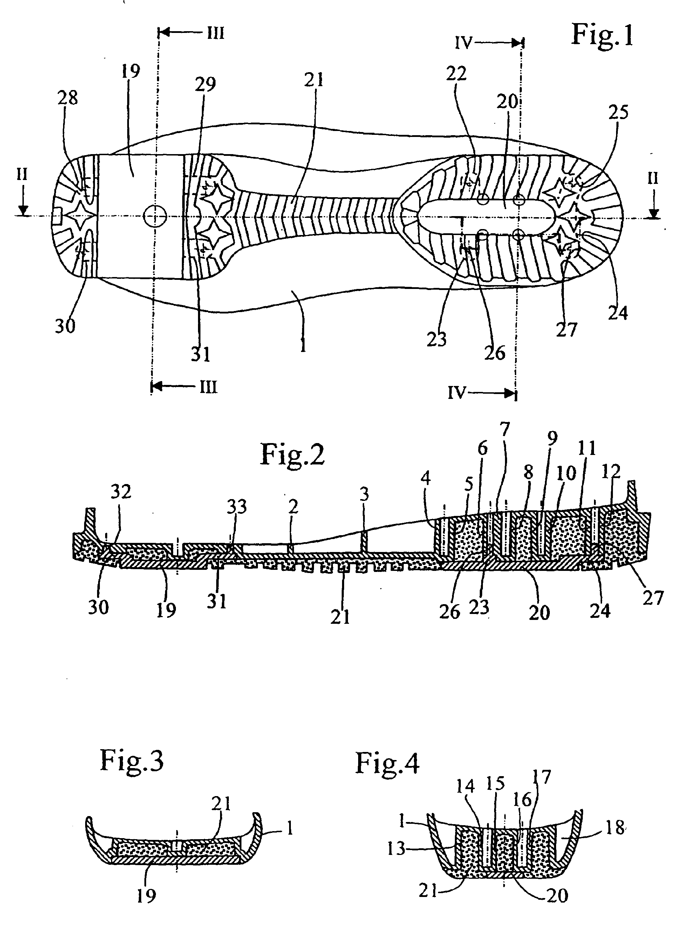

Aux figures 1 à 4 on a représenté un bas de coque 1 en matière plastique injecté de type polyuréthanne. Le matériau injecté, relativement rigide, est en outre rigidifié par des parois transversales telles que les parois 2 à 12 et des parois longitudinales telles que les parois 13 à 18. Dans la partie antérieure et dans la partie postérieure du bas de coque, les parois transversales et longitudinales forment des logement s'ouvrant vers le bas, ainsi que quatre passages cylindriques traversants. Le profil alvéolaire de la partie 1 permet en outre, de manière bien connue, d'avoir une épaisseur de matière injectée approximativement uniforme.

Le bas de coque 1 est muni à l'avant d'une plaquette d'appui 19 et à l'arrière d'une plaquette d'appui 20. Ces plaquettes d'appui 19 et 20 sont en matière plastique relativement dure et leur face extérieure est lisse de manière à présenter un faible coefficient de frottement. Entre les plaquettes d'appui 19 et 20, en avant et en arrière de la plaquette d'appui 19 et autour de la plaquette d'appui arrière 20, s'étend une semelle de marche profilée 21 en matière plastique souple et relativement tendre. La surface d'appui des plaquettes d'appui 19 et 20 affleure la semelle de marche 21. Le profil de la semelle de marche 21, que l'on distingue sur le dessin, est analogue au profil d'une semelle de chaussure de randonnée. Ce profil peut bien entendu varier dans une grande mesure comme c'est le cas des semelles de chaussure de randonnée.

Les plaquettes d'appui 19 et 20 sont fixées au bas de coque 1 par la surinjection de la matière plastique de la semelle 21. A cet effet, la plaquette 20 est munie de quatre pattes latérales 22, 23, 24, 25 qui s'étendent au-dessus de la face supérieure de la plaque d'appui comme on peut le voir à la figure 2. Ces pattes 22 à 25 sont munies de tétons tels que les tétons 26 et 27 perpendiculaires au plan de la plaque et engagés dans les trous cylindriques traversants de la partie 1 pour le positionnement de la plaquette d'appui.

De même, la plaquette d'appui antérieure 19 est munie de quatre pattes latérales 28 à 31 également pourvues de tétons de positionnement tels que les tétons 32 et 33, engagés dans les trous cylindriques traversants correspondants de la partie 1

Après avoir positionné et fixé provisoirement les plaquettes d'appui 19 et 20 par leurs tétons au bas de coque 1, on place le bas de coque dans un moule, puis on surinjecte la matière plastique 21 qui vient recouvrir les pattes des plaques d'appui de manière à fixer ces plaques au bas de coque et à former la semelle profilée. La matière plastique injectée vient en outre remplir les cavités du bas de coque au-dessus des plaquettes d'appui 19 et 20 ainsi que les cavités formées en avant de la plaquette antérieure 19 et en arrière de la plaquette postérieure 20. Le matériau 21 forme ainsi une isolation thermique au-dessus des zones d'appui de la chaussure.

Les pattes des plaquettes d'appui pourraient être préalablement fixées au bas de coque au moyen de vis.

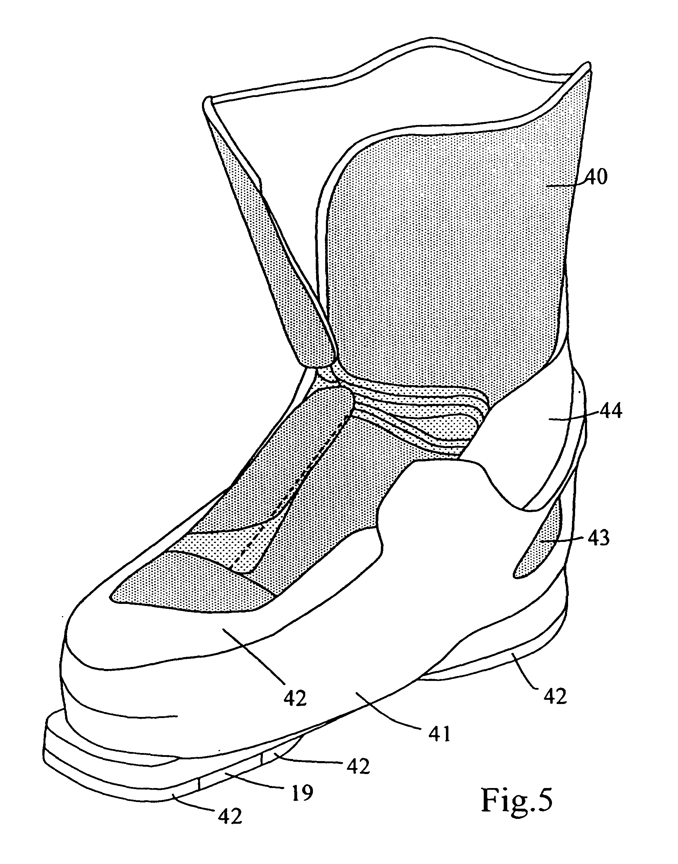

La technique décrite ci-dessus est en particulier applicable à une chaussure du type décrit dans le brevet US 6,120,589. Une telle chaussure est représentée à la figure 5. Elle est constituée d'une tige souple 40 en forme de botte s'ouvrant sur le devant et d'une armature 41 en forme de berceau en plastique relativement rigide, la tige 40 et l'armature 41 étant solidarisées par l'injection, par le bas, d'une matière plastique souple 42, identique ou analogue à la matière 21 du premier mode d'exécution, cette matière plastique étant injectée entre la tige souple 40 et l'armature 41 comme décrit dans le brevet US 6,021,589. L'armature 41 présente des ajours tels que 43 destinés à réduire son poids. La matière souple surinjectée 42 forme une semelle de marche analogue à la semelle 21 ainsi qu'une zone intermédiaire d'étanchéité sur le dessus du pied entre l'armature 41 et la botte 40. Un collier non représenté vient s'articuler sur l'armature 41 dans les zones 44 et la chaussure est munie de boucles (non représentées) pour sa fermeture et son serrage.

L'enseignement de l'invention est bien entendu applicable à toutes chaussures de ski alpin susceptibles de recevoir une semelle de marche en matière plastique surinjectée et à toutes formes et toutes localisations de surfaces d'appui, par exemple à des surfaces d'appui telles que décrites dans le brevet FR 2 786 371.

## Revendications

1. Chaussure de ski comprenant une partie rigide qui constitue une armature en forme de berceau (41) entourant une partie souple en forme de botte (40), le fond au moins de la partie rigide étant ajouré et la partie rigide étant fixée à la partie en forme de botte par une matière plastique en matériau souple (21 ; 42) injecté à travers le fond ajouré, entre la partie rigide et la partie en forme de botte, la partie inférieure de la tige de la chaussure étant munie à l'avant et au talon de surfaces d'appui (19, 20) relativement dures et à faible coefficient de frottement, **caractérisée en ce que** la matière plastique injectée en matériau souple (21 ; 42) forme une semelle de marche profilée de la chaussure, entre les surfaces d'appui (19, 20), en avant et en arrière de la surface d'appui avant (19) et autour de la surface d'appui arrière (20).

2. Chaussure de ski selon la revendication 1, **caractérisée en ce que** le matériau souple (21 ; 42) de la semelle de marche profilée de la chaussure est disposé autour des surfaces d'appui (19, 20) de manière à fixer ces surfaces d'appui (19, 20) au bas de coque (1).

3. Chaussure de ski selon la revendication 2, **caractérisée en ce que** la surface d'appui arrière (20) est entièrement entourée par la semelle de marche profilée.

4. Chaussure de ski selon l'une des revendications précédentes, **caractérisée en ce que** les surfaces d'appui sont constituées de plaquettes rapportées (19, 20).

5. Chaussure de ski selon la revendication précédente, **caractérisée en ce que** les plaquettes rapportées (19, 20) sont munies de pattes de fixation (22, 23, 24, 25, 28, 29, 30, 31) recouvertes par le matériau souple (21 ; 42) surinjecté.

6. Chaussure de ski selon la revendication précédente, **caractérisée en ce que** les pattes de fixation (22, 23, 24, 25, 28, 29, 30, 31) sont munies de tétons (26, 27, 32, 33) venant s'emboîter dans la partie inférieure de la chaussure.

7. Chaussure de ski selon l'une des revendications précédentes, **caractérisée en ce qu'**elle comprend des trottoirs de hauteur normalisée, selon la norme ISO 5355.

## Claims

1. Ski boot, comprising a rigid part constituting a mounting piece shaped like a cradle (41) surrounding a boot shaped smooth part (40), the bottom of at least the rigid part being open-worked, the rigid part being fastened to the boot shaped part through a soft plastic material (21; 42) injected through the open-worked bottom between the rigid part and the boot shaped part, the front and the heel part of the lower portion of the boot shaft being equipped with relatively hard supporting surfaces (19, 20) having a low friction coefficient, **characterised in that** the soft plastic material (21; 42) constitutes a profiled walking sole of the boot between the supporting surfaces (19, 20), ahead and after the front supporting surface (19), and around the rear supporting surface (20).

2. Ski boot according to claim 1, **characterised in that** the soft material (21; 42) of the profiled walking sole of the boot is disposes around the supporting surfaces (19, 20) in a manner as to fasten the supporting surfaces (19, 20) at the bottom of the hull (1).

3. Ski boot according to claim 2, **characterised in that** the rear supporting surface (20) is fully surrounded by the profiled walking sole.

4. Ski boot according to any one of the preceding claims, **characterised in that** the supporting surfaces are formed by deposited plates (19, 20).

5. Ski boot according to the preceding claim, **characterised in that** the deposited plates (19, 20) are equipped with fastening paws (22, 23, 24, 25, 28, 29, 30, 31) recovered by the soft, injection-over moulded material (21; 42).

6. Ski boot according to the preceding claim, **characterised in that** the fastening paws (22, 23, 24, 25, 28, 29, 30, 31) are equipped with studs (26, 27, 32, 33) inserted into the lower part of the boot.

7. Ski boot according to any one of the preceding claims, **characterised in that** it comprises curbs of a standardised height according to the ISO 5355 standard.

## Patentansprüche

1. Schischuh mit einem steifen Teil in Form einer Wiege (41), welcher einen biegsamen Teil in Form eines Stiefels (40) umgibt, wobei wenigstens der Boden des steifen Teils durchbrochen ist und der steife Teil am Teil in Form eines Stiefels mit einem nachgiebigen Kunststoffmaterial (21; 42) befestigt ist, welches durch den durchbrochenen Boden hindurch zwischen den steifen Teil und den Teil in Form eines Stiefels gespritzt wurde, und wobei der untere Teils des Schafts des Schuhs im vorderen Bereich und an der Ferse mit verhältnismässig harten Auflageflächen (19, 20) versehen ist, die einen geringen Reibungskoeffizienten aufweisen, **dadurch gekennzeichnet, dass** das gespritzte nachgiebige Kunststoffmaterial (21; 42) eine profilierte Laufsohle des Schuhs zwischen den Auflageflächen (19, 20), vor und hinter der vorderen Auflagefläche (19) und um die hintere Auflagefläche (20) herum bildet.

2. Schischuh nach Anspruch 1, **dadurch gekennzeichnet, dass** das nachgiebige Material (21; 42) der profilierten Laufsohle des Schuhs um die Auflageflächen (19, 20) herum angeordnet ist, um diese Auflageflächen (19, 20) am Unterteil der Schale zu befestigen.

3. Schischuh nach Anspruch 2, **dadurch gekennzeichnet, dass** die hintere Auflagefläche (20) vollständig von der profilierten Laufsohle umgeben ist.

4. Schischuh nach einem der vorangehenden Ansprüche, **dadurch gekennzeichnet, dass** die Auflageflächen aus aufgesetzten Plättchen (19, 20) bestehen.

5. Schischuh nach dem vorangehenden Anspruch, **dadurch gekennzeichnet, dass** die aufgesetzten Plättchen (19, 20) mit Befestigungslappen (22, 23, 24, 25, 28, 29, 30, 31) versehen sind, die vom überspritzten nachgiebigen Material (21; 42) bedeckt sind.

6. Schischuh nach dem vorangehenden Anspruch, **dadurch gekennzeichnet, dass** die Befestigungslappen (22, 23, 24, 25, 28, 29, 30, 31) mit Zapfen (26, 27, 32, 33) versehen sind, die in den unteren Teil des Schuhs eingesteckt sind.

7. Schischuh nach einem der vorangehenden Ansprüche, **dadurch gekennzeichnet, dass** er Sohlenvorsprünge mit gemäss der Norm ISO 5355 genormter Höhe aufweist.
